# EUROPEAN PATENT SPECIFICATION

(11) **EP 1 652 200 B1**
(45) Date of publication and mention of the grant of the patent: **06.03.2013**
(21) Application number: 04780421.6
(22) Date of filing: 06.08.2004
(51) Int. Cl.: C02F 1/469

(54) **POWER EFFICIENT FLOW THROUGH CAPACITOR SYSTEM**
LEISTUNGSEFFIZIENTES DURCHSTRÖMUNGSKONDENSATORSYSTEM
SYSTEME DE CONDENSATEUR A CIRCULATION CONTINUE A BON RENDEMENT ENERGETIQUE

(30) Priority: 06.08.2003 US 492938 P
(43) Date of publication of application: 03.05.2006
(73) Proprietor: Biosource, Inc., Worcester, MA 01607 (US)
(72) Inventor: ANDELMAN, Marc D., Worcester, MA 01607 (US); KURAN, Shihab, Green Brook, NJ 08812 (US); ZULKIEWICZ, Jon, Palmer, MA 01069 (US)
(74) Representative: Fluit, Jeroen
(86) International application number: PCT/US2004/025582
(87) International publication number: WO 2005/015584

(56) References cited:
- WO-A1-01/95410
- US-A- 5 200 068
- US-A- 5 376 253
- US-A- 5 415 768
- US-A- 5 779 891
- US-A1- 2002 154 469
- US-A1- 2003 098 266
- US-A1- 2003 098 266
- US-A1- 2004 130 851
- US-B1- 6 325 907
- US-B1- 6 413 409

## Description

### Field of The Invention

The field of the invention is systems for capacitive deionization of fluids by the use of flow through capacitors.

### Background of the invention

It is generally recognized that, in order to purify concentrated water, flow-through capacitor purification systems need to be staged. It is an objective of the present invention to improve the staging and power efficiency of flow-through capacitors. Power efficiency is a measure of how well power is distributed in a multi-cell system, and is defined here as the averaged percent of power needed by a flow-through capacitor system divided by the system's peak power needs. Staging efficiency is a measure of how well a staged system is designed to limit the inter-stage mixing caused by inter-stage dead volume, and is defined here as the percent purification achieved by a multi-cell or multi-stage system divided by the sum of the percent purifications of each individual cell or stage. In the past, each cell or stage of a flow-through capacitor system has been housed within a separate housing or cartridge holders, which were charged or discharged together, either in parallel or in series. *See, e.g.,* US 2004/0121204 A1. A dead volume mixes with the water which is purified in each stage, and decreases the resolution of the band of purified water, due to band broadening, as it moves from one stage to another. The mixing effect also leads to a need to operate with greater numbers of stages, and may reach a lower voltage limit, as voltage is lowered when used with concentrated water such as sea water. Wherefore, a need exists for an improved flow-through capacitor which has less mixing of purifed or concentrated water with each other or with the feed water, and for a method and system which allows the capacitor to operate more efficiently at lower, energy saving voltages.

In addition, capacitors exhibit a charging characteristic whereby upon initial application of a voltage, they require peak power. Charging banks or stages of capacitors all at once multiplies this peak power, thereby increasing the wattage rating and cost of power supplies needed to provide this power. Therefore, an additional need exists to more efficiently distribute power to banks of flow-through capacitor cells which may be fluid or electrically staged in a combination of parallel or in series.

WO0195410 discloses a flow-through electrochemical system which includes a plurality of flow-through electrochemical cells, the system configured to place each of the cells in electrical connection and in fluid connection with each of the other cells. The system includes a fluid stream, a means for connecting the system to a power supply, a means for monitoring the voltage of each of a plurality of cells and a means for controlling the voltage of each of the plurality of cells.

### Summary Of The Invention

Sequentially powered and controlled flow-through capacitor systems of the present invention control individual flow-through capacitor cells, or groups of cells, in a timed sequence, with individual cells out of phase with each other. The system of the present invention may be configured with one cell per cartridge holder. Preferably, the flow-through capacitor system is configures to have one or more integrated stages, by which is meant that two more purification stages occupy a common housing, i.e., are within the same container or cartridge holder. When one flow-through capacitor cell represents a discreet purification stage, integral staging is achieved by housing two or more flow-through capacitor cells within a single container or cartridge holder.

The integrated stage design embodiment of the present invention eliminates the need, cost, and complication of connecting separate cartridge holders per stage by containing multiple stages within the same cartridge holder. This integrated stage design reduces the band broadening that would otherwise be caused by mixing of the band of purified water with dead volume as it moves from stage to stage. Staging efficiencies of 50% or more are possible by using sequential charge cycles coupled with integrated stage design. Another advantage achieved by organizing a flow-through capacitor system so that some or all stages are physically integrated is to diminish the amount of dead volume that otherwise exists between the capacitor layers and the inside the walls of the cartridge holder or capacitor container.

The integrated stage design of the present invention incrementally sharpens purified and concentrated bands of feed solution as it flows from stage to stage. In individually staged capacitors of the prior art, a dead volume exists between each multilayer capacitor cell and the internal walls of the housing of the cartridge holder. In the integrated stage embodiment, each stage shares common capacitor material layers. Only the current collectors, or, where electrodes are conductive enough not to need a current collector, the electrodes, are independently actuated and electrically separated from each other. Therefore, multiple stages can share the same cartridge holder, thereby eliminating the need for separate current collectors. Eliminating excess dead volume through integrated staging allows operation of the capacitor at lower voltage while, at the same time, obtaining a deep purification peak. The result of this is that the capacitor may be operated at lower, more energy efficient voltages.

One special use of integrated staging is for low energy desalination of sea water. The present invention achieves that end by removing a little bit of salt at a time at low energy, and then amplifying this signal by virtue of synchronous charging of multiple capacitor stages that share the same capacitive material, spacer, and optional charge barrier layers in order to sharpen bands of purified and concentrated water. This band sharpening method uses staging to refine or sharpen concentration bands, analogous to other staged methods such as chromatography, distillation, and absorption.

An additional advantage of the sequential charging system of the present invention is to provide power in steps between multiple cells in order to optimize peak power usage to allow use of lower wattage, less expensive power supplies, so as to avoid the requirement for peak power at the initial application of voltage and distribute power to banks, or stages, of flow-through capacitor cells which may be fluid or electrically staged in a combination of parallel or in series. By sequentially spreading out the application of peak power to individual cells in a multi-cell system, power efficiencies of up to 50% to 100% are possible. In other words, power usage may approach the averaged power needed over the sum of the individual cell cycles.

The flow-through capacitor of the present invention can make use of the same layers used in prior flow-through capacitors systems, such as, for example, US 6,413,409 and US 6,709560 *("Charge barrier flow-through Capacitor").* Preferably, in a flow-through capacitor system of the present invention, in place of integral current collectors backing one or more electrode layers, multiple current collectors are arranged sequentially along a fluid flow path. In the integrated stage embodiment, these are arrayed within the same cartridge holder. These current collectors are made to be charged or discharged according to various sequences and times. The sequential charging of the multiple current collectors may either be done in series or in parallel, and in addition, within the context of either a series or a parallel flow cell.

Load leveling may be achieved by such sequential control of flow-through capacitors cells according to the present invention whereby capacitor cells are charged or discharged in a timed sequence. In doing so, the present invention avoids the multiplication of peak power needs, thereby minimizing the size and cost of power supplies required to power a multiple flow-through capacitor system. The cells may be progressively powered or charged in parallel, or in series. If powered or charged in series, the voltage is stepped up as each cell is switched in an additive sequence onto the others in series. Parallel cells may be powered or charged by switching onto a common bus. Individual cells may have individual or common power supplies. Flow-through capacitor cells can be integrated within a single cartridge holder, or may be discrete cells in a combination of series or parallel electrical or fluid flow. Upstream cells within an integrated stage cartridge holder, or individual stages with one cell per cartridge holder, or groups of cells, may be charged first, then additional downstream stages or cells are charged with a time delay. Cells connected together, either singly or in groups, in parallel or series in an electrical or fluid flow sense, may be sequentially actuated or controlled according to the present invention. This time delay may be selected so that the peak capacitive charging peaks do not overlap, in order to obtain a lower average peak charging current.

It is desirable for the present invention to cut the peak wattage of power supplies needed by 30% to 50% or more. In order to level the watt, amperage, or power load of the flow-through capacitor system, charge cycles of individual cells or groups of cells, either in series or parallel, are preferably actuated sequentially, or between 1 and 359 degrees out of phase, such as by charging or discharging, or reversing the cell polarities in increments that vary between one and one hundred seconds. For example, cells can be charged or discharged in increments of between five and thirty seconds. Sequential operation of the charge cycles may also follow other patterns than the direction of flow. For example, where it is important to quickly reduce the output conductivity, it may be preferable to charge the downstream cells first. In lieu of time, a voltage or an amperage sensor may relay data from individual cells to a logic chip or circuit in order to control the sequence of actuation of a series of flow-through capacitor cells or groups of cells.

The circuits used to distribute power to flow-through capacitor system preferably provide DC power in a sequential fashion in order to minimize the capacitive charging power surge. Circuits designed for stepwise charging of multiple batteries, multiplex charging or discharge of banks of batteries may be used to distribute power to the flow-through capacitor cells according to the present invention; examples of such circuit design include, without limitation, US 6140799, US 6326768, US 6140799, US6750631, US 5506456, US 5461264, US 5483643, US 5514480, and US 5710504. Where batteries or battery banks are replaced by flow-through capacitor cells or capacitor banks, and with the addition of a necessary switches, relays, or FET circuits that sequentially switch in or switch out flow-through capacitor cells using a timer, voltage sensor, or amperage sensor logic of the present invention. Power sequencer circuits designed to distribute power across multiple loads, such as those known to those skilled in the art to be used to charge banks of batteries, capacitors, lights, motors, or other multiple loads, and preferably which are designed to avoid power surges when charging multiple loads, can be adapted to provide DC power and used in the flow-through capacitor system of the present invention, where the loads are multiple flow-through capacitors. Examples of a power sequencer circuit include, but are not limited to, US 6766222 and US 6239510, circuits used in solar power distribution such as US 6685334 where the solar power source is replaced by a DC power source, power distribution circuits where DC power is provided or substituted for AC outputs and used to provide sequential power control according to the present invention. One example, without limitation, of a timer circuit that may be used for sequential control of flow-through capacitor cells according to the present invention is described in US 6011329. Power Field Effect Transistors (FETS) or thyristors may be also used as mechanical contacts or relays in various timer circuits that may be employed, for one example, an H Bridge FET circuits such as described by Blanchard, Eugene (http://www.armory.com/-rstevew/Public/Motors/H-Bridges/Blanchard/h-bridge.htm; last visited August 6, 2004).

Power may be distributed to multiple stages of the present invention by using a power distribution or power management system circuits designed to control peak loads, or a sequential power distribution circuit. Useful examples of circuits that may be used, where the electric loads are multiple flow-through capacitor cells, include without limitation US 5119014, US 4093943, US 4180744, US RE29560, US 6385057, US 5070440, US 5969435, and US 4894764. In an additional embodiment, power sharing schemes where batteries, fuel cells, or generators are used to receive or give power to or from either the flow-through capacitor system of the invention or a prior art flow-through capacitor system may also be used. An example of such a power sharing system is described in, but not limited by, US 5969435. The present invention may be combined with various power sharing circuits that may also be used to level the load, distribute power, or conserve energy during the charging of multiple capacitor cells or stages. Systems described for charging multiple batteries may be used, with capacitors replaced for some or all of the batteries. Examples are described in but not limited to US 6444159, US 5757163, US 5955868, and US 6157867 (each hereby incorporated by reference).

A sequential power circuit similar to ones used to generate current pulses, including but not limited to US 4001598, US 5952735, and US 5585758 can also be used to sequentially charge and discharge flow-through capacitor loads to a power source in order to offset by between 1 and 100 seconds the peak amp and power requirements of individual flow-through capacitor cells in a multiple cell system. Failed or short circuited cells may be bypassed by using a current or voltage sensing or voltage drop circuit such as without limitation US 6087035, US 5362576, and US5650240 to close valves into or out of individual cells. In addition, another way to cut peak power needs is to use charged capacitors to power discharged capacitors, using an optional DC to DC converter between cells or series groups of cells to save additional energy if desired.

### Brief Description Of The Drawings

Fig. 1 is a schematic illustration of an integrated stage flow-through capacitor and system of the present invention.
Fig. 2 is a detail view of a flow-through capacitor cell assembly.
Fig. 3 is an illustration of an integrated stage flow-through capacitor cell.
Fig. 4 is a schematic illustration of a spiral wound integrated stage flow
Fig. 5 is a representation of a nested current collector flow-through capacitor.
Fig. 6 is a representation of a series or series array flow-through capacitor.
Fig. 7 is an illustration of concentration stream manifold 22 and purification stream manifold 23 combining together the concentration streams 20 and purification streams 21 produced by multiple electrode or electrode assembly layers 8.
Fig. 8 is a graphical illustration of sequential charging current of an eight cell flow-through capacitor system.

### Detailed Description

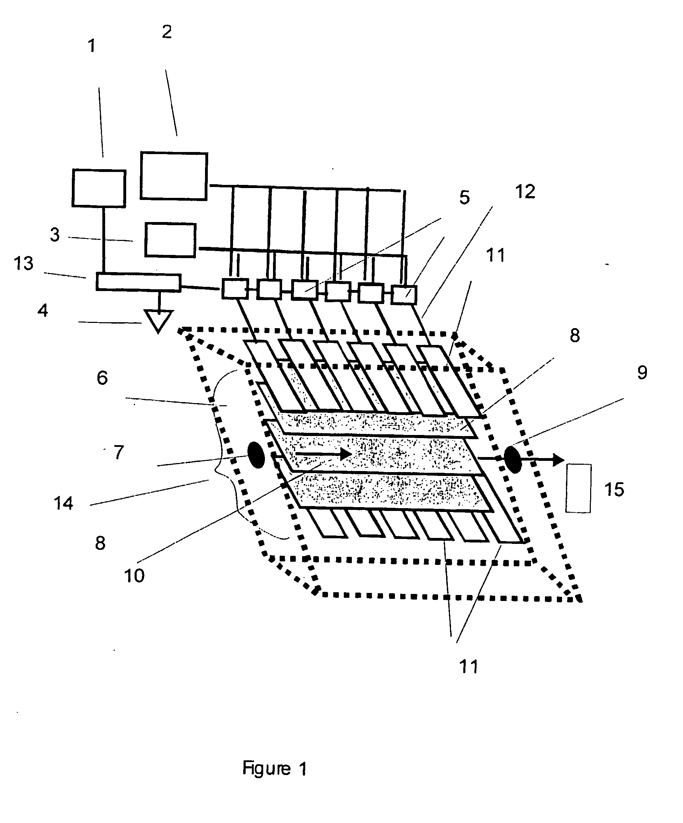

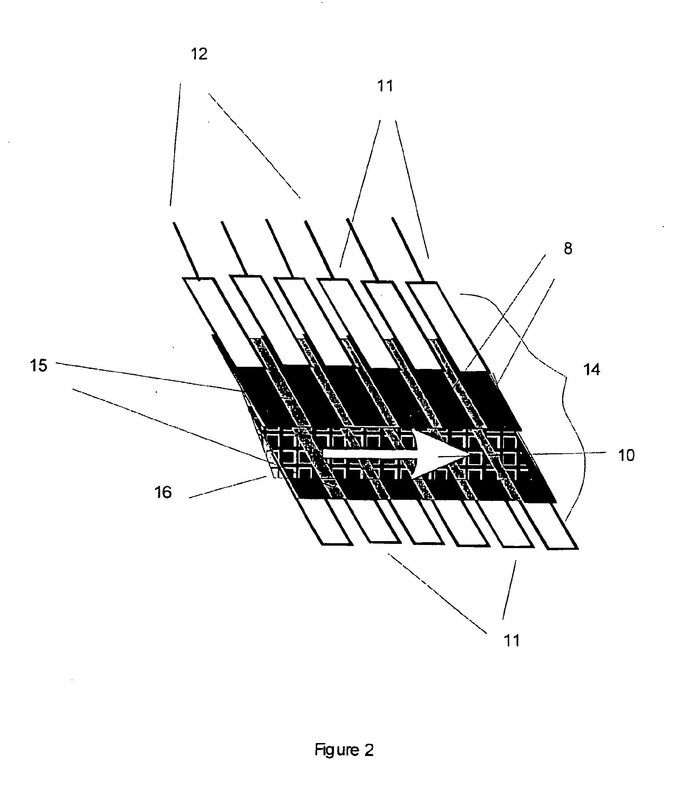

Fig. 1 is a schematic of an integrated stage flow-through capacitor cell and system of the present invention, showing a controller or logic means 1, a power supply 2, e.g., a capacitor power supply, a switch power supply 3, ground 4, switches, relays, or FETS, e.g., switches 5, a cartridge or cell holder 6 as a casing for one or more capacitor cells, inlet 7, electrode or electrode assembly 8, outlet 9, flow path 10, individual current collector 11, individual current collector lead 12, circuit 13, e.g., an integrated circuit, programmable logic chip, digital input/out, or printed circuit; cell assembly 14, and sensor 15. A computer or controller 1 and a additional digital input/output 13 controls and actuates switches, relays, or FETS 5 in either a preprogrammed or feed-back controlled sequence using conductivity, pH, or other composition data, or flow, amperage, or voltage data supplied to controller 1 by sensor 15. Switch 5 can be multiple switching, and can also be an integrated circuit or chip with multiple outputs, can be triggered to ground 4 and thereby allow flow of current to current collector leads 12 into individual current collectors 11. Cell assembly 14 is made of electrode or electrode assembly layers 8 with flow spacer or spacers 16 (shown in Fig. 2), and individual current collectors 11. Multiple switching 5 can be controlled by a programmable chip, computer, controller, logic, timer, or in response to amp, voltage, or conductivity sensor data input, to sequentially charge or power the individual collector leads 12.

Fig. 2 represents a detailed view of a flow-through capacitor cell assembly 14 of the present invention showing optional electrical insulating spacers 15, insulating electrodes or electrode assemblies 8 one from the other. Electrode assemblies 8 are backed by individual current collectors 11 which are individually connected to individually actuated electrical leads 12.

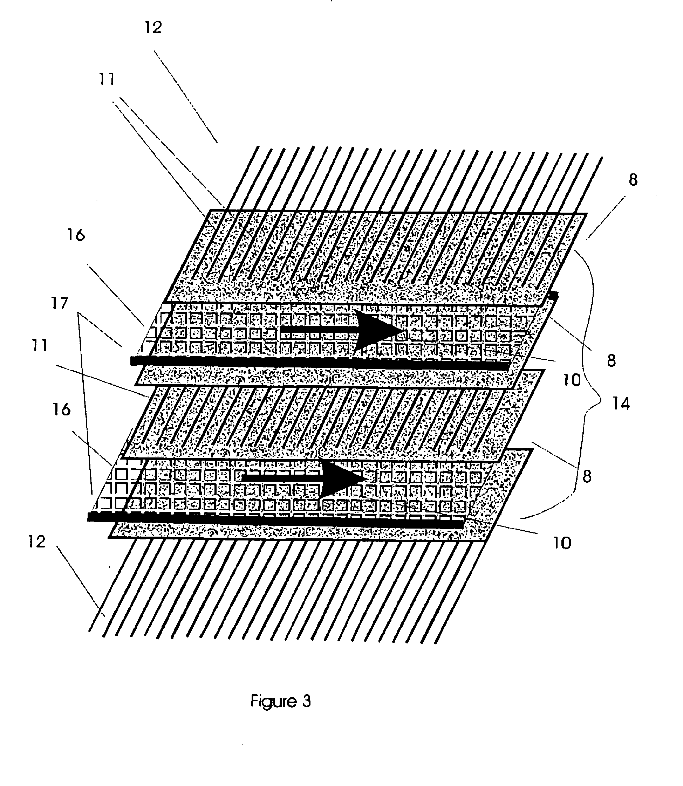

Fig. 3 represents an integrated stage flow-through capacitor cell of the present invention with individual current collectors 11, current collector leads 12, against electronically conducting electrode or electrode assembly 8. The electrode or electrode assembly 8 is spaced apart by flow space or flow spacer 16 with optional flow or series electrical isolation gaskets 14. Flow path 10 is shown cutting across the multiple current collectors 11 connected to individual electrical leads 12. The multiple current collectors shown in Fig. 3 may be thin enough to be wires, for example, less than two millimeters in diameter.

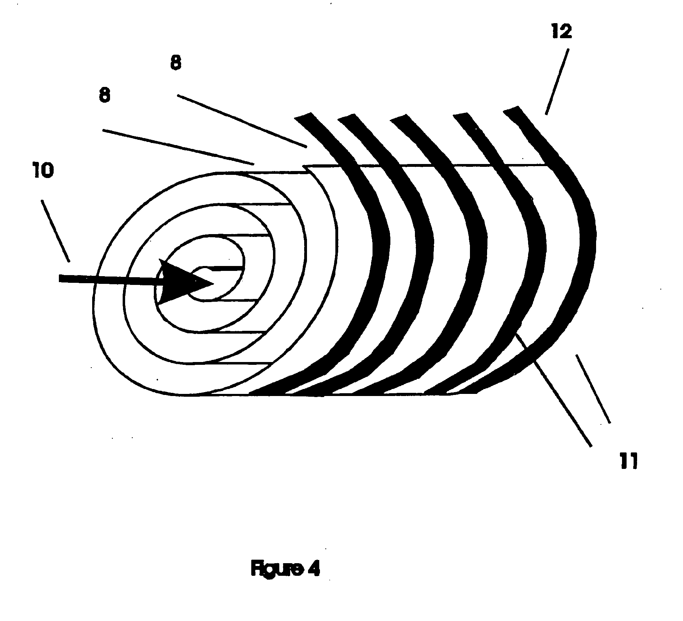

Fig. 4 represents a spiral or concentric flow-through capacitor of the present invention with electrodes or electrode assembly 8, flow path 10 intercepting multiple current collectors 11 connected to individual electrical leads 12.

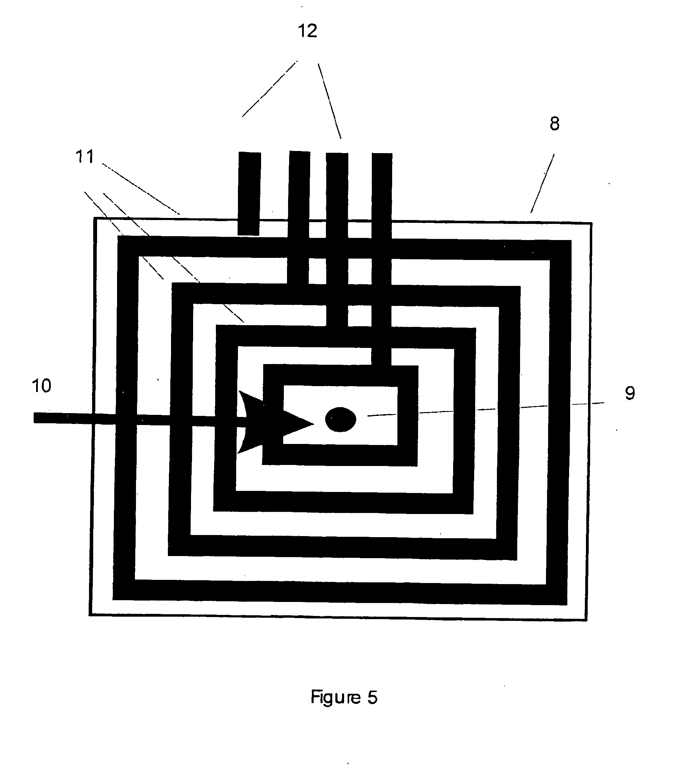

Fig. 5 represents a nested integrated stage flow-through capacitor single electrode assembly layer 8 with associated individual current collectors 11 and current collector leads 12, flow path 10 and flow inlet our outlet.

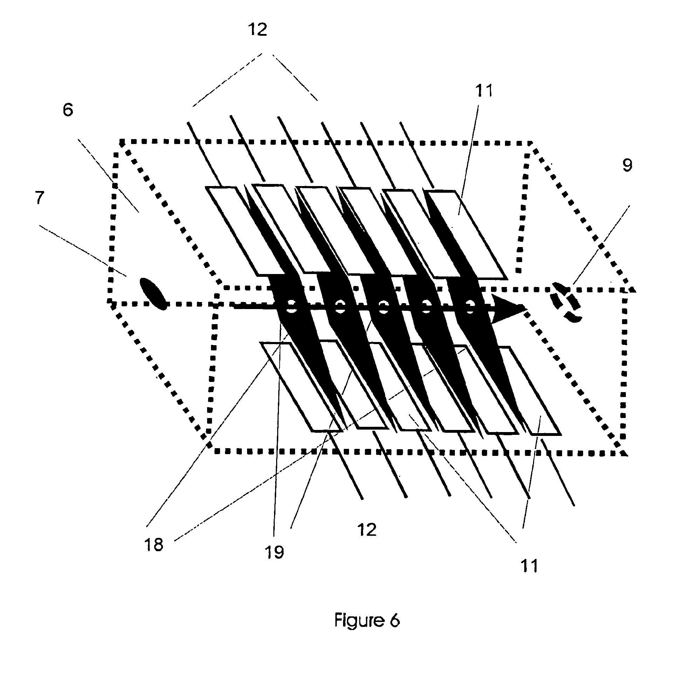

Fig. 6 represents a flow-through capacitor of the present invention with a matrix series connection such that individual cells may be connected in series both horizontally and vertically. Fig. 6 illustrates cartridge holder or capacitor casing 6, inlet or outlet 7, outlet or inlet 9, current collectors 11, individual current collector leads 12, and series separator 18, and high resistive series cell separator flow path 10. Only individual current collectors 11 and current collector leads 12 are shown, with the addition of inter-cell series separators 18. An optional high resistive flow path 19 is included for use when current collectors 11 are connected in series across the stack. Either a parallel or a series cell, not shown, would be placed between the end current collectors 11. Where series cells are used, and where each of these cells is in turn connected in series, the resulting capacitor cell would form a series matrix, with resulting voltage upon charge of the matrix the multiple of the series voltage of the individual cells times the number of series cells further connected together in series. Cartridge holder or capacitor casing 6 contains the matrix connected flow-through capacitor formed by these components plus additional electrodes or electrode assembly layers 8 and flow spacers 16 shown in Fig. 2

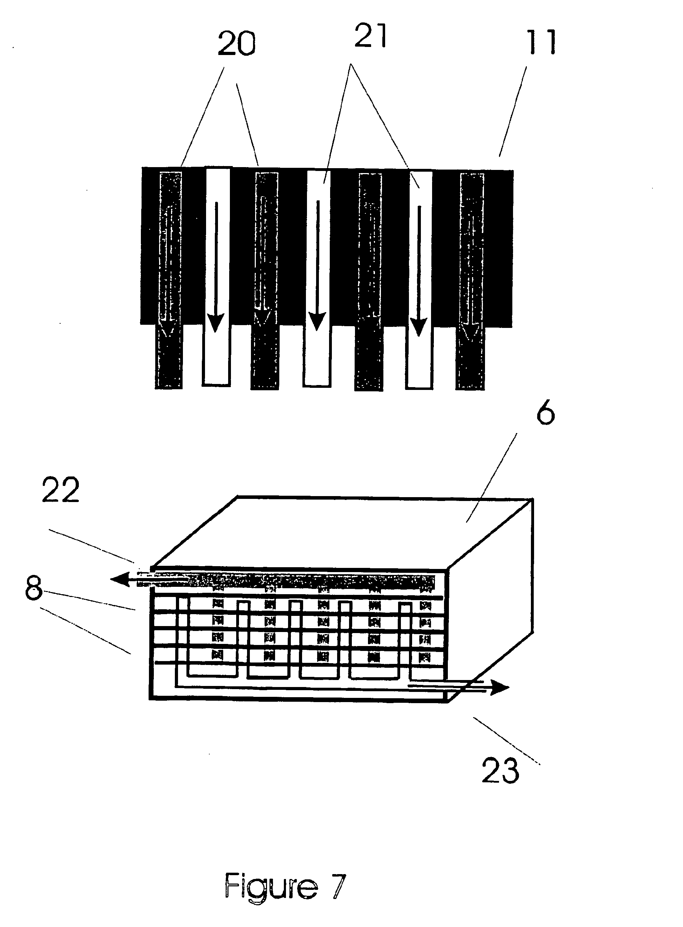

Fig. 7 represents a flow-through capacitor of the present invention with the flow parallel to the current collector 11, which may be used to provide continuous concentration streams 20 and purified solution flow channel 21 to provide a purification stream. Concentration stream 22 is a flow channel for concentrated solution. Purification stream 23 is a flow channel for purified solution. Concentration stream 22 and purification stream 23 are connected by manifolds so as to combine together the concentration streams 20 and purification streams 21 produced by multiple electrode or electrode assembly layers 8.

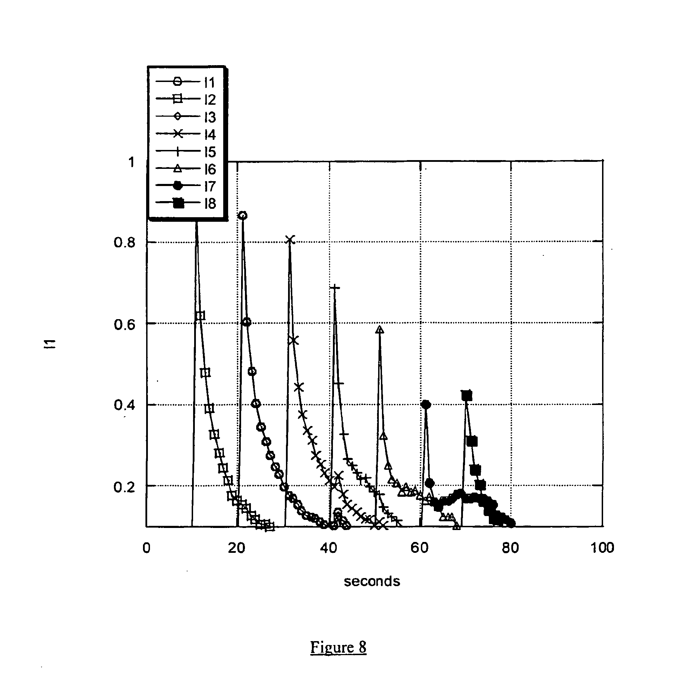

In Fig. 8, curves I1 through I8 represent eight separate charging currents of eight flow-through capacitor cells sequentially charged at constant voltage in an eight cell integrally staged flow-through capacitor system. Optionally, constant current schemes can also be used. This charging scheme can be applied to either integrated or individual flow-through capacitor cells. Notice how each current trace, I 1 through I 8, has a typical capacitive charging shape, with peak current in the time equals less than one seconds, then leveling off rapidly after that over a period of 1 to 60 seconds or more. If, for example, the multiple cells have been charged together in parallel or in series, there would only have been one charging curve with a maximized peak wattage. This is undesirable because it requires a larger, more expensive power supply. By offsetting the peak amperage and power curves as in Fig. 8, the additive power is reduced. Optimally, the additive power can be averaged over multiple cells in this way, to comprise the average power usage over a charge cycle averaged over a number of cells. The charge cycles can be synchronized to correspond with the arrival of a traveling purification segment or peak as it moves serially from cell to cell, in order to trigger progressive removal of total dissolved solids from that purification peak. Flow can also be parallel through a number of cells with asynchronous charge cycles. A charge cycle may be a combination of constant voltage, constant current, reverse polarity, and optional shunt cycles, with each such portion of a charge cycle lasting between zero and 300 seconds or more, for example 60 seconds, or 5000 seconds. Charge cycles between individual flow-through capacitor cells may be asynchronous or out of phase between one quarter and 300 seconds or more, for example, 100 seconds or 10,000 seconds. Charge cycles may be triggered by a timer, a conductivity reading, a voltage, a pH, or other data. Valves to individual cells or groups of cells that dispose of waste, delivered purified fluid, or which recycle in flow loops may be triggered synchronously or asynchronously together with the above charge cycles. For example, it may be desirable to trigger individual valves from individual cells in a multi-cell system at the same time the purification or waste part of a charge cycle is triggered. The purified product or concentrated waste segments of water from individual cells or cell groups may subsequently be combined together, such as through a manifold, in order to maximize the level of purification or concentration, for example, to than 40% purified and better than 40% recovery or more, for example 90%.

In one embodiment, the integrated stage flow-through capacitor of the present invention utilizes multiple current collectors 11 individually connected to current collector leads 12 with common flow path layers 14, and electrode or electrode assembly layers 8 that may be optionally separated by inter electrode insulators 19. The current collectors are multiple in the sense that a plurality of current collectors are transected by a common flow path 10, share common electrode or electrode assemblies 8, or are placed within the same cartridge holder or capacitor casing 6. A stage is represented by a pair of current collectors typically perpendicular to, but optionally parallel to, the flow path 10. Flow path 10 therefore typically intersects oppositely charge current collector pairs. As the fluid in flow path 10 flows across these current collector pairs, the current collectors, through individual current collector leads 12, are activated in a sequence. This sequence can either be programmed or may be trigged by a sensor 17. Each time a pair of current collectors is activated with a voltage, additional materials are either removed from or added to a band of water which flows from cell to cell, where cell may be defined as a oppositely charged pair of current collectors charged together in time as part of a charge sequence among many pairs of current collectors. The multiple current collectors 11 of the present invention within each cartridge holder may bracket a stack of electrode assemblies 8 that are electrically insulated from each other in true series fashion, such as in US 6628505 or the current collectors can be bundled together in parallel, to form anode and cathode, with geometries as known to those skilled in the art, including but not limited to the geometries of US 5,192,432, *"Flow Through Capacitor ";* US 5,196,115, *"Controlled Charge Chromatography System";* US 5,200,068, *"Controlled Charge Chromatography System";* US 5,360,540, *"Chromatography System";* US 5,415,768, *"Flow-Through Capacitor ";* US 5,538,611, *"Planar, Flow-Through, Electric. Double Layer Capacitor And A Method Of Treating Liquids With The Capacitor";* US 5,547,581, *"Method Of separating Ionic Fluids With A Flow Through Capacitor ";* US 5,620,597, *"Non-Fouling Flow-Through Capacitor";* US 5,748,437, *"Fluid Separation System With Flow-Through Capacitor";* US 5,779,891, *"Non-Fouling Flow-Through Capacitor System";* US 6,127,474, *"Strengthened Conductive Polymer Stabilized Electrode Composition And Method of Preparing ";* US 6,325,907 , *"Energy And Weight Efficient Flow-Through Capacitor, System And Method";* US 6,413,409, *"Flow-Through Capacitor And Method Of Treating Liquids With It.* Those skilled in the art will also be guided by WO93/13844, *"Chromatography System With flow-Through Capacitor And Method";* WO94/26669, *"A Planar, Flow-Through, Electric, Double Layer Capacitor And A Method Of Treating Liquids With The Capacitor ";* WO95/21674, *Flow-Through Capacitor And Chromatographic System And Method ";* WO97/13568, *"Non-fouling, Flow-fouling, Flow-Through Capacitor system And Method Of separation ";* WO00/14304, *"Flow-Through Capacitor And Method Of Treating Liquids With It";* WO 01/09907 A1, *Flow-Through Capacitor And Method";* WO 01/13389 A1, *"Flow-through Capacitor system And Method";* WO 01/66217 A1, *"Low Pore Volume electrodes With Flow-Through Capacitor And energy Storage Use And Method";* WO 01/95410 A1, *"Fluid and electrical connected flow-Through Electrochemical Cells, System Cells, System And Method ";* and WO 02/29836 A1, *"Fringe-Field Capacitor Electrode For Electrochemical Device ".* In addition to the stacked layer geometries shown here, individual electrodes shown in the electrode array WO 03/009920 A 1 may be sequentially charged according to the present invention in order to form flow through capacitor stages according to the present invention.

The electrode assembly 8 can include a combination flow-through capacitor electrodes and optional current collector, ion perm selective membranes, or charge barrier material. (US 6709560). For example, the electrode can be comprised of high capacitance particles, including carbon or ceramics, held together with a binder material including a hydrogel or functional charge barrier material, fibrillated polypropylene or PTFE, latex, or cross linked or sintered polymer or hydrocarbon materials. For example, if a charge barrier material is used as a binder, it may be a fluorine containing ionomer, an elastomeric or thermoformable hydrogel containing either or both of strong acid or strong base functionality. Materials of use as charge barriers are known to those skilled in the art. (*See, e.g.,* Toshikatsu Sata, Ion Exchange Membranes, The Royal Society of Chemistry, publ., 2004).

An important aspect of the invention is the ability to vary the voltage, current, or power, either perpendicular or parallel to the flow path within a single cartridge holder, or among a group of single cartridge holder cells. In the integrated stage embodiment, this is accomplished by incorporating multiple current collectors within a single cartridge holder, where the current collectors can have individual electrode, charge barrier, and flow spacer layers, or can share one or more of these layers in order to simplify manufacture. A fluid, solution, or solute to be purified of concentrated is introduced into each cell. As this fluid flows through each cell, the multiple current collectors are independently synchronously actuated with a purification or a concentration peak that forms as the flow moves through each cell. This is analogous to the peaks formed in chromatography systems. For example, a small amount of total dissolved solids can be purified from water each time the flow stream passes a particular current collector, or pair, or set of current collectors. This produces a slightly purified aliquot of water. As this aliquot moves along its flow path, additional current collectors are actuated. Where this flow path cuts across multiple current collectors, the flow stream is separated into purification and concentration peaks that can be separated, e.g., by a valve. Where the flow is parallel to the multiple current collectors, the fluid will be separated into side by side purification and concentration streams.

Where electrode layers are shared between multiple current collectors, it is important that the current collectors are electrically isolated. To do this, the distance between current collectors has to be wide enough so that the current collectors have a fair degree of electrical isolation between them. Generally, wider than one sixty-fourth of an inch, and optimally, under three inches, such as between one eight and one quarter inch, will suffice to isolate the cells. Cells are sufficiently isolated when the width between current collectors backing an adjacent electrode material of a given conductivity is such that the overall conductivity of the combined current collector - electrode combination is 1 ohm cm or greater. Resistance between individual current collectors is preferably 0.1 ohm or more.

Prior flow-through capacitor systems reach a practical limit of efficiency due to the fact that less total dissolved solids and other contaminants are removed from water per charge cycle as voltages are lowered. The flow rate utilization per gram of carbon needs to be lowered in order to provide a given percent purification at a lowered voltage and energy usage level. This slowing of the flow rate was necessary in prior systems, because sufficient levels of purification must be maintained in order to overcome the mixing effects of the cartridge holder dead volume. The capacitor of the present invention minimizes this cartridge holder dead volume by eliminating inter-stage cartridge holders. For example, with integrated staging, the dead volume due to the flow spacer may be larger than the dead volume due to the volume that exists between the capacitor cell and the inside of the cartridge holder. The capacitor cell is defined as the electrode, flow spacer, and a current collector and charge barrier layers. Therefore, focused bands of purified water may be obtained at low voltages and therefore low energy usage levels. An advantage of the present invention is that energy may be saved by charging an integrated stage cell many times at lower voltages. Percent utilization of the cell may be increased by virtue of operating the cell so that more than one concentration band is present at a given time within a given material layer or cartridge holder. To obtain purified water at a desired purification level, a valve coupled with a conductivity sensor selects out water desired purification and concentration levels. Percent recovery may also be pre-selected by presetting conductivity control based upon a mass balance between purified, feed, and/or waste concentrations.

An additional advantage of the present invention is that it allows operation without a valve, achieving continuous purification. In this case, flow may be parallel to the current collectors, and fluid concentration may be modulated within the plane of the flow. Fig. 7 depicts how water may be purified in purification stream 21 between one set of current collectors and concentrated in concentration stream 20 between adjacent sets of current collectors, with purification streams 21 and concentration streams 20 being coplanar in the direction of flow. These coplanar streams are brought together by, e.g., manifolds, to form a continuously purified stream 23 and concentrated stream 22. Optionally, ions can be manipulated by operation of the current collectors in order to form a central flow path of one concentration and side flow paths of another. In either case, adjacent concentration bands are formed which may be directed to separate collections paths or separately collected from separate outlets in the cell casing provided for this purpose. A valve is not except when it is desirable to switch concentration and purification streams by polarity reversal or otherwise electronically manipulating the charge cycle sequence.

Individual current collectors may be pre-manufactured onto electrode layers by lamination or by continuously coating a banded pattern of current collector material onto an electrode material. The current collector material may be a conductive material less than 1 ohm cm in resistance, including a graphite material, or, may be a metal foil, in particular, metal foil protected by a conductive vinyl or a form of carbon-polymer composite layer using carbon black, nanotubes, graphite powders, etc. mixed in with a thermoplastic, olefin, fluorocarbon, or a other polymer, used with a metal backing to form a current collector where the metal is protected from water by the thin polymer layer, with the polymer layer typically under 0.03 cm thick. Conversely, a capacitance containing electrode material may be discontinuously formed in a banded pattern upon a suitably conductive current collector layer. A carbon containing material may be used. Microparticulate titanium oxide powder is also advantageous.

Electrode materials may include carbon black, activated carbons, sintered carbons, aerogels, glassy carbons, carbon fibers, nanotubes, graphite, and other forms of carbon in particular those with surface areas over 400 BET, nanotube gels, conductive polymers, ceramics, anatase titanium oxide, or another material that has a capacitance above 1 Farad per square meter when applied in a layer 0.1 cm or less thick. A binder material may be used which holds the electrode capacitive particles together, including hydrogels, latex, thermoplastics, and fluoropolymers. Charge barrier materials may be an ion exchange polymer, hydrogel, cross linked polymer, or membrane, preferably with a charge density of over 0.1 milli-equivalents per gram. The charge barrier material can also function as a binder or adhesive, which is used cause capacitance containing electrode particles together to form an electrode sheet, or to adhere them to a current collector.

To manufacture the present invention, current collector, electrode, and a charge barrier layers may be laminated or layered together in a stacked configuration, then cut to length and inserted into a cartridge holder. As many layers as can be cut effectively at one time are layered and pre cut together. The blocks of materials so formed can in turn be layered on top of one another and inserted into a cartridge holder designed to fit them. Current collector tabs may overlap out either end, and be bundled together in parallel or connected in series. If graphite foil is used as a current collector, the end tabs may be infiltrated with an oily material or a polymer so that they do not wick water. A metal compression contact may be formed with a nut, bolt, and-or washer arrangement to the bundled graphite tabs. This contact may be protected from water by a compression nut containing a gasket which screws down over the top in order to cover underlying metal contacts. Inert metals such as titanium, tantalum, including palladium or platinum coated or infused valve metals, may be used to form metal to graphite contacts. It is preferable that contact resistance be less than 1 ohms. Metal contact to graphite compression over 10 psi, and metal to graphite contract areas over 1 cm² may be used to achieve this.

In Fig. 8 the current declines with each successive charge. This is because a volume of feed water was being successively purified as it passed through each of the eight sequentially charged cells. As the water becomes more purified, it increases the resistance as it passes through subsequent cells, thereby causing them to draw less current and power. The fact that all the cells are not charged at once allows the purification peak to be deepened, allowing greater peak purification, for example, 50% purification or more. Using integrated flow-through capacitors to cut dead volume we have been able to achieve 70% purification of sea water in an eight cell system at only 0.3 Volts. Based upon energy measurements in single cells, this low voltage is likely to be in the 15 watt hour per gallon range. Significant purification in the 20% range has been measured with as low as 0.1 volts, which represents very little energy. The percent purification can be increased by adding a sufficient number of stages.

Cells within a sequentially controlled train of flow through capacitor individual cell stages need not all be the same size. For example, downstream cells, which experience a partly purified stream of water compared to upstream cells, may be sized smaller in order to save cost, or in order to design shorter charge cycles that match the charge cycles of upstream cells. On the other hand, a downstream cell may also be sized larger where it is important to increase the percentage of purification or concentration in the last stage compared to the previous stages.

## Claims

1. A flow-through capacitor system comprising a plurality of flow-through capacitor cells, each of said plurality of cells in electrical communication with a charge cycle sequence controller to control individual flow through capacitor cells wherein charged capacitor cells are used to power discharged capacitor cells, individual flow through capacitor cells are controlled in a timed sequence and the charge cycles between individual flow-through capacitor cells are either asynchronous or out of phase by at least one quarter second.

2. The flow-through capacitor system of claim 1, further comprising a plurality of current collectors and a flow spacer shared among said plurality of current collectors.

3. The flow-through capacitor system of claim 1, which is operated such that multiple concentration bands exist simultaneously within a given material layer.

4. The flow-through capacitor system of claim 1, further comprising a conductivity controlled valve between at least two of said plurality of current collectors.

5. The flow-through capacitor system of claim 1, wherein valves are individually triggered with charge cycles in order to produce a purified product stream.

6. The flow-through capacitor system of claim 1, wherein said flow-through capacitor system has a staging efficiency of 50% or more.

7. The flow-through capacitor system of claim 2, wherein said flow-though capacitor system has a power efficiency of 50% or more.

8. The flow-through capacitor system of claim 1, wherein the charge cycles of individual cells are synchronized to correspond with the arrival of a segment of purified water traveling serially through multiple cells.

9. The flow-though capacitor system of claim 1, wherein voltage is incremented in a step wise fashion as cells-are sequentially powered by adding them in series.

10. The flow-through capacitor system of claim 1, wherein cells are powered by sequentially switching them together in parallel.

11. The flow-through capacitor system of claim 1, whereby the voltage varies along the flow path.

12. The flow-through capacitor system of claim 1, comprising a DC to DC converter between cells or groups of cells.

13. The flow-through capacitor system of claim 1, wherein each of said cells is contained in a cell holder and each cell holder contains no more than one of said cells, said cell holder being a container, a cartridge holder, or a casing.

14. The flow-through capacitor system of claim 1, wherein the charge cycles are actuated by a timer, a conductivity reading, a voltage, or pH.

15. The flow-through capacitor system of claim 1, wherein valves to individual cells or groups of cells that dispose of waste, deliver purified fluid, or which recycle in flow loops are triggered synchronously or asynchronously together with the above charge cycles.

16. The flow-through capacitor system of claim 1, comprising for reducing peak wattage by at least 30%.

17. The flow-through capacitor system of claim 1, wherein each of said cells is actuated between one and 359 degrees out of phase.

18. The flow-through capacitor system of claim 1, wherein sequential operation of charge cycles follows the direction of flow.

19. The flow-through capacitor system of claim 1, comprising a power management system for sharing power between the flow through capacitor cells, said power management system comprising one or more of a battery, a fuel cell, and a generator.

20. The flow-through capacitor system of claim 1, wherein failed or short circuited cells are bypassed by means of a sensing circuit.

21. The flow-through capacitor system of claim 1, wherein either the purified product or concentrated waste segments of water from one or more cells or cell groups are combined together.

22. The flow-through capacitor of claim 21, wherein said system achieves better than 40% recovery or purification.

23. The flow-through capacitor of claim 21, wherein said segments of water are combined through a manifold.

24. The flow-through capacitor system of claim 2, wherein two or more cells are contained within a single cell holder, said cell holder being a container, a cartridge holder, or a casing.

25. The flow-through capacitor system of claim 24, wherein the plurality of current collectors bracket a stack of true series electrode assemblies.

26. The flow-through capacitor system of claim 8, wherein current declines with each successive charge cycle.

27. The flow-through capacitor system of claim 8, wherein at least one of said cells differs in size from at least one other of said cells.

28. A method of charging a flow through capacitor system, comprising providing a source of DC power and distributing said DC power in sequential fashion to individual flow through capacitor cells wherein charged capacitor cells are used to power discharged capacitor cells, individual flow through capacitor cells are controlled in a timed sequence and the charge cycles between individual flow-through capacitor cells are either asynchronous or out of phase by at least one quarter second in order to minimize a capacitive charging power surge.

29. The method of claim 28, further comprising using a voltage or amperage sensor to control sequence of actuation among a group of cells.

## Patentansprüche

1. Durchflusskondensatorsystem, das mehrere Durchflusskondensatorzellen umfasst, wobei jede der mehreren Zellen mit einer Ladezyklusabfolgesteuerung zum Steuern eines einzelnen Durchflusses durch die Kondensatorzellen in elektrischer Verbindung steht, wobei geladene Kondensatorzellen dazu verwendet werden, entladene Kondensatorzellen mit Energie zu versorgen, der einzelne Durchfluss durch Kondensatorzellen in einer getakteten Abfolge gesteuert wird, und die Ladezyklen zwischen einzelnen Durchflusskondensatorzellen entweder asynchron oder um mindestens eine Viertelsekunde phasenverschoben sind.

2. Durchflusskondensatorsystem nach Anspruch 1, darüber hinaus mehrere Stromkollektoren und ein Durchflussabstandsstück umfassend, das auf die mehreren Stromkollektoren gemeinsam aufgeteilt ist.

3. Durchflusskondensatorsystem nach Anspruch 1, das so betrieben wird, dass gleichzeitig mehrere Konzentrationsbänder in einer bestimmten Materialschicht vorhanden sind.

4. Durchflusskondensatorsystem nach Anspruch 1, darüber hinaus ein leitfähigkeitsgeregeltes Ventil zwischen mindestens zwei der mehreren Stromkollektoren umfassend.

5. Durchflusskondensatorsystem nach Anspruch 1, wobei Ventile einzeln zusammen mit Ladezyklen ausgelöst werden, um einen gereinigten Produktstrom herzustellen.

6. Durchflusskondensatorsystem nach Anspruch 1, wobei das Durchflusskondensatorsystem einen Stufentrennungswirkungsgrad von 50% oder mehr hat.

7. Durchflusskondensatorsystem nach Anspruch 2, wobei das Durchflusskondensatorsystem eine Energieeffizienz von 50% oder mehr hat.

8. Durchflusskondensatorsystem nach Anspruch 1, wobei die Ladezyklen einzelner Zellen so synchronisiert sind, dass sie mit der Ankunft eines Teils gereinigten Wassers übereinstimmen, das nacheinander durch mehrere Zellen fließt.

9. Durchflusskondensatorsystem nach Anspruch 1, wobei eine Spannung schrittweise erhöht wird, wenn Zellen nacheinander mit Energie versorgt werden, indem sie in Reihe hinzugefügt werden.

10. Durchflusskondensatorsystem nach Anspruch 1, wobei Zellen mit Energie versorgt werden, indem sie nacheinander parallel zusammengeschaltet werden.

11. Durchflusskondensatorsystem nach Anspruch 1, wobei die Spannung entlang des Strömungswegs variiert.

12. Durchflusskondensatorsystem nach Anspruch 1, einen DC/DC-Wandler zwischen Zellen oder Gruppen von Zellen umfassend.

13. Durchflusskondensatorsystem nach Anspruch 1, wobei jede der Zellen in einem Zellenhalter enthalten ist, und jeder der Zellenhalter nicht mehr als eine solcher Zellen enthält, wobei es sich bei dem Zellenhalter um einen Behälter, einen Kartuschenhalter oder ein Gehäuse handelt.

14. Durchflusskondensatorsystem nach Anspruch 1, wobei die Ladezyklen durch einen Taktgeber, einen Leitfähigkeitsmesswert, eine Spannung oder einen pH-Wert aktiviert werden.

15. Durchflusskondensatorsystem nach Anspruch 1, wobei Ventile, die zu einzelnen Zellen oder Gruppen von Zellen führen, die Abfall entsorgen, gereinigtes Fluid abgeben, oder in Strömungskreisläufen wiederverwerten, synchron oder asynchron zusammen mit den vorstehenden Ladezyklen ausgelöst werden.

16. Durchflusskondensatorsystem nach Anspruch 1, das vorgesehen ist, um eine Spitzenwattleistung um mindestens 30% zu senken.

17. Durchflusskondensatorsystem nach Anspruch 1, wobei jede der Zellen zwischen einem und 359 Grad Phasenverschiebung aktiviert wird.

18. Durchflusskondensatorsystem nach Anspruch 1, wobei ein Folgebetrieb der Ladezyklen der Durchflussrichtung folgt.

19. Durchflusskondensatorsystem nach Anspruch 1, ein Energieverwaltungssystem zum Aufteilen von Energie zwischen den Durchflusskondensatorzellen umfassend, wobei das Energieverwaltungssystem eine Batterie, eine Brennstoffzelle und/oder einen Generator umfasst.

20. Durchflusskondensatorsystem nach Anspruch 1, wobei ausgefallene oder kurzgeschlossene Zellen mittels einer Abtastschaltung umgangen werden.

21. Durchflusskondensatorsystem nach Anspruch 1, wobei entweder das gereinigte Produkt oder konzentrierte Abfallteile von Wasser aus einer oder mehreren Zelle/n oder Gruppe/n von Zellen miteinander kombiniert werden.

22. Durchflusskondensatorsystem nach Anspruch 21, wobei das System mehr als 40% Wiedergewinnung oder Reinigung erzielt.

23. Durchflusskondensatorsystem nach Anspruch 21, wobei die Teile von Wasser durch eine Sammelleitung kombiniert werden.

24. Durchflusskondensatorsystem nach Anspruch 2, wobei zwei oder mehr Zellen in einem einzelnen Zellenhalter enthalten sind, wobei es sich bei dem Zellenhalter um einen Behälter, einen Kartuschenhalter oder ein Gehäuse handelt.

25. Durchflusskondensatorsystem nach Anspruch 24, wobei die mehreren Stromkollektoren einen Stapel eingepasster Reihenelektrodenbaugruppen einklammern.

26. Durchflusskondensatorsystem nach Anspruch 8, wobei Strom bei jedem fortlaufenden Ladezyklus geringer wird.

27. Durchflusskondensatorsystem nach Anspruch 8, wobei sich mindestens eine der Zellen in der Größe von mindestens einer anderen der Zellen unterscheidet.

28. Verfahren zum Laden eines Durchflusskondensatorsystems, umfassend, eine DC-Energiequelle bereitzustellen und die DC-Energie nacheinander auf einzelne Durchflusskondensatorzellen zu verteilen, wobei geladene Kondensatorzellen dazu verwendet werden, entladene Kondensatorzellen mit Energie zu versorgen, der einzelne Durchfluss durch Kondensatorzellen in einer getakteten Abfolge gesteuert wird, und die Ladezyklen zwischen einzelnen Durchflusskondensatorzellen entweder asynchron oder um mindestens eine Viertelsekunde phasenverschoben werden, um einen kapazitiven Ladeenergieanstieg zu minimieren.

29. Verfahren nach Anspruch 28, darüber hinaus umfassend, einen Spannungs- oder Stromstärkensensor zu verwenden, um die Aktivierungssteuerabfolge in einer Gruppe von Zellen zu steuern.

## Revendications

1. Système condenseur à flux traversant comprenant une pluralité de cellules de condenseur à flux traversant, chacune de ladite pluralité de cellules étant en communication électrique avec un contrôleur de séquence de cycle de charge pour contrôler des cellules de condenseur à flux traversant individuelles de sorte que des cellules de condenseur chargées sont utilisées pour fournir une puissance à des cellules de condenseur déchargées, des cellules de condenseur à flux traversant individuelles sont contrôlées dans une séquence temporisée, et les cycles de charge entre cellules de condenseur à flux traversant individuelles sont soit asynchrones soit hors de phase à raison d'au moins un quart de seconde.

2. Système condenseur à flux traversant selon la revendication 1, comprenant en outre une pluralité de collecteurs de courant et un élément d'écartement de flux partagé parmi ladite pluralité de collecteurs de courant.

3. Système condenseur à flux traversant selon la revendication 1, qui est amené à fonctionner de telle façon que des bandes à concentrations multiples existent simultanément à l'intérieur d'une couche matérielle donnée.

4. Système condenseur à flux traversant selon la revendication 1, comprenant en outre une valve contrôlée en conductivité entre au moins deux de ladite pluralité de collecteurs de courant.

5. Système condenseur à flux traversant selon la revendication 1, dans lequel des valves sont déclenchées individuellement avec des cycles de charge afin de produire un écoulement de produit purifié.

6. Système condenseur à flux traversant selon la revendication 1, dans lequel ledit système condenseur à flux traversant présente une efficacité de séparation de 50 % ou plus.

7. Système condenseur à flux traversant selon la revendication 2, dans lequel ledit système condenseur à flux traversant présente une efficacité de puissance de 50 % ou plus.

8. Système condenseur à flux traversant selon la revendication 1, dans lequel les cycles de charge de cellules individuelles sont synchronisés pour correspondre avec l'arrivée d'un segment d'eau purifiée qui circule en série à travers des multiples cellules.

9. Système condenseur à flux traversant selon la revendication 1, dans lequel le voltage est augmenté par incréments de manière pas à pas lorsque les cellules sont alimentées séquentiellement en puissance en les ajoutant en série.

10. Système condenseur à flux traversant selon la revendication 1, dans lequel les cellules sont alimentées en puissance en les commutant séquentiellement ensemble en parallèle.

11. Système condenseur à flux traversant selon la revendication 1, dans lequel le voltage varie le long du trajet du flux.

12. Système condenseur à flux traversant selon la revendication 1, comprenant un convertisseur continu/continu entre des cellules ou des groupes de cellules.

13. Système condenseur à flux traversant selon la revendication 1, dans lequel chacune desdites cellules est contenue dans un porte-cellules, et chaque porte-cellules ne contient pas plus qu'une desdites cellules, ledit porte-cellules étant un conteneur, un porte-cartouche, ou un boîtier.

14. Système condenseur à flux traversant selon la revendication 1, dans lequel les cycles de charge sont activés par un temporisateur, un lecteur de conductivité, un voltage ou un pH.

15. Système condenseur à flux traversant selon la revendication 1, dans lequel des valves vers des cellules individuelles ou vers des groupes de cellules qui assurent le rejet de déchets, la sortie de fluide purifié, ou qui recyclent dans des boucles de flux sont déclenchées de manière synchrone ou asynchrone ensemble avec les cycles de charge précités.

16. Système condenseur à flux traversant selon la revendication 1, conçu pour réduire le wattage de pointe d'au moins 30 %.

17. Système condenseur à flux traversant selon la revendication 1, dans lequel chacune desdites cellules est activée avec un déphasage entre 1 et 359°.

18. Système condenseur à flux traversant selon la revendication 1, dans lequel le fonctionnement séquentiel des cycles de charge suit la direction du flux.

19. Système condenseur à flux traversant selon la revendication 1, comprenant un système de gestion de puissance pour partager la puissance entre les cellules de condenseur à flux traversant, ledit système de gestion de puissance comprenant un ou plusieurs éléments parmi une batterie, une pile à combustible, et un générateur.

20. Système condenseur à flux traversant selon la revendication 1, dans lequel des cellules défaillantes ou des cellules en court-circuit sont by-passées au moyen d'un circuit détecteur.

21. Système condenseur à flux traversant selon la revendication 1, dans lequel soit le produit purifié soit des segments d'eau à déchets concentrés provenant d'une plusieurs cellules ou de groupes de cellules sont combinés ensemble.

22. Système condenseur à flux traversant selon la revendication 21, dans lequel ledit système assure une récupération ou une purification meilleure que 40 %.

23. Système condenseur à flux traversant selon la revendication 21, dans lequel lesdits segments d'eau sont combinés via un collecteur.

24. Système condenseur à flux traversant selon la revendication 2, dans lequel deux ou plusieurs cellules sont contenues dans un unique porte-cellules, ledit porte-cellules étant un conteneur, un porte-cartouche, ou un boîtier.

25. Système condenseur à flux traversant selon la revendication 24, dans lequel la pluralité de collecteurs de courant coiffe une pile d'ensembles à électrodes réelles en série.

26. Système condenseur à flux traversant selon la revendication 8, dans lequel le courant décline à chaque cycle de charge successif.

27. Système condenseur à flux traversant selon la revendication 8, dans lequel l'une au moins desdites cellules a une taille qui diffère d'une autre au moins desdites cellules.

28. Procédé pour charger un système condenseur à flux traversant, comprenant de fournir une source de puissance à courant continu et de distribuer ladite puissance à courant continu de manière séquentielle vers des cellules de condenseur à flux traversant individuelles, dans lequel des cellules de condenseur chargées sont utilisées pour alimenter en puissance des cellules de condenseur déchargées, des cellules de condenseur à flux traversant individuelles sont contrôlées dans une séquence temporisée et les cycles de charge entre des cellules de condenseur à flux traversant individuelles sont soit asynchrones soit déphasés à raison d'au moins un quart de seconde afin de minimiser une pointe de puissance de charge capacitive.

29. Procédé selon la revendication 28, comprenant en outre d'utiliser un capteur de voltage soit un capteur de courant pour contrôler la séquence d'actionnement parmi un groupe de cellules.
